# EUROPEAN PATENT APPLICATION

(11) **EP 4 629 749 A1**
(43) Date of publication of application: **08.10.2025**
(21) Application number: 24819447.4
(22) Date of filing: 05.03.2024
(51) Int. Cl.: H05B 6/64, H05B 1/02, H04N 23/57, G06V 20/68

(54) **COOKING APPARATUS AND CONTROL METHOD THEREFOR**

(30) Priority: 09.06.2023 KR 20230074294
(71) Applicant: Samsung Electronics Co., Ltd., Suwon-si, Gyeonggi-do 16677 (KR)
(72) Inventor: LEE, Seulkee, Suwon-si Gyeonggi-do 16677 (KR); CHANG, Hwan, Suwon-si Gyeonggi-do 16677 (KR); HWANG, Kumchul, Suwon-si Gyeonggi-do 16677 (KR)
(74) Representative: Gulde & Partner
(86) International application number: PCT/KR2024/002790
(87) International publication number: WO 2024/253294

(57) **Abstract**

A cooking apparatus includes: a thermal imaging camera; a display; a memory configured to store at least one instruction; and at least one processor configured to execute the at least one instruction to: acquire, using the thermal imaging camera, an image of a cooking space provided in one area of the cooking apparatus, wherein a cooking subject is located in the image of the cooking space, and the image of the cooking space may include at least one area of the cooking space that is divided into a plurality of sub-areas, identify, based on the acquired image, temperatures of each sub-area of the at least one area of the cooking space, and control the display to provide information on a state of a cooking operation of the cooking apparatus to a user based on the identified temperatures of each sub-area of the at least one area of the cooking space.

## Description

### [Technical Field]

The disclosure relates to a cooking apparatus and a method for controlling thereof, and more particularly, to a cooking apparatus that analyzes an image acquired by using a thermal imaging camera and provides information on a cooking operation state of the cooking apparatus to a user or controls a cooking operation, and a method for controlling thereof.

### [Background Art]

As research and development of smart home appliances have progressed, methods are being devised for compensating shortcomings of conventional home appliances and for a user to use home appliances more conveniently.

By controlling cooking apparatuses such as a microwave oven, an oven, an induction, a cook-top, a pressure cooker, etc. among home appliances more precisely, quick and effective cooking operations may be performed. Examples of research and development includes a technology of providing a cooking method and cooking information according to a subject of cooking, a control technology of monitoring whether a cooking apparatus was contaminated due to materials and food that become the subjects of cooking in a cooking process, providing information to a user regarding the contamination, and improving a state of the contaminated cooking apparatus may be suggested as examples.

For implementing the aforementioned control technology of a cooking apparatus, device components such as a sensor, a camera, and a microphone may be utilized together, and a cooking apparatus may be controlled based on information acquired by using a trained artificial intelligence model.

### [Disclosure]

### [Technical Solution]

According to an aspect of the disclosure, a cooking apparatus includes: a thermal imaging camera; a display; a memory configured to store at least one instruction; and at least one processor configured to execute the at least one instruction to: acquire, using the thermal imaging camera, an image of a cooking space provided in one area of the cooking apparatus, wherein a cooking subject is located in the image of the cooking space, and the image of the cooking space may include at least one area of the cooking space that is divided into a plurality of sub-areas, identify, based on the acquired image, temperatures of each sub-area of the at least one area of the cooking space, and control the display to provide information on a state of a cooking operation of the cooking apparatus to a user based on the identified temperatures of each sub-area of the at least one area of the cooking space.

The at least one processor may be further configured to execute the at least one instruction to: identify the temperatures of each sub-area of the at least one area of the cooking space corresponding to a first number of sub-areas on the image based on the acquired image until a temperature of the cooking space reaches a first temperature after the cooking operation of the cooking apparatus was initiated, and identify the temperatures of each sub-area of the at least one area of the cooking space corresponding to a second number of sub-areas on the image based on the acquired image until the temperature of the cooking space reaches a second temperature from the first temperature.

The at least one processor may be further configured to execute the at least one instruction to: identify the temperatures of each sub-area of the at least one area of the cooking space corresponding to a first number of sub-areas on the image based on the acquired image while a first time passes from a time point at which the cooking operation of the cooking apparatus was initiated, and identify the temperatures of each sub-area of the at least one area of the cooking space corresponding to a second number of areas on the image based on the acquired image while a second time passes from the time point when the first time passed.

The second number is greater than the first number, and the second temperature is greater than the first temperature.

The cooking apparatus may further include :a cooking operation part configured to transfer heat to the cooking subject or changing a location or the direction of the cooking subject, and the at least one processor may be further configured to execute the at least one instruction to: identify whether the cooking operation part is in an abnormal state based on the identified temperatures of each sub-area of the at least one area of the cooking space, and based on identifying that the cooking operation part is in the abnormal state, control the display to provide information on the abnormal state of the cooking operation part to the user.

The cooking apparatus may further include: a cooking operation part configured to transmit heat to the cooking subject or changing a location or the direction of the cooking subject, and the at least one processor may be further configured to execute the at least one instruction to: identify one area of the cooking space having a temperature lower than an entire average temperature of the cooking space based on identified temperatures of each sub-area of the at least one area of the cooking space, and control the cooking operation part to raise the temperature of the one area by heating the one area.

The at least one processor may be further configured to execute the at least one instruction to: identify whether the cooking subject exists in the cooking space based on a change of the temperature of the cooking space from a time point at which the cooking operation of the cooking apparatus was initiated to a time point at which a predetermined time has passed, and based on identifying that the cooking subject does not exist in the cooking space, control the display to provide, to the user, information on a cooking operation state corresponding to a state in which the cooking subject does not exist in the cooking space.

The cooking apparatus may further include: a cooking operation part configured to transmit heat to the cooking subject or change a location or the direction of the cooking subject, and the at least one processor may be further configured to execute the at least one instruction to: identify an abnormal state of the cooking operation part based on a vector value output by inputting the acquired image of the cooking space into a cooking operation state identification model of the cooking apparatus, and based on identifying that the cooking operation part is in the abnormal state, control the display to provide information on the abnormal state of the cooking operation part to the user.

The cooking apparatus may further include: a cooking operation part configured to transmit heat to the cooking subject or changing a location or the direction of the cooking subject, and the at least one processor may be further configured to execute the at least one instruction to control the cooking operation part to heat one area of the cooking space having a temperature lower than an average temperature of the at least one area of the cooking space to raise the temperature of the one area based on a vector value output by inputting the acquired image of the cooking space into a cooking operation state identification model of the cooking apparatus.

The at least one processor may be further configured to execute the at least one instruction to: identify whether the cooking subject exists in the cooking space based on a vector value output by inputting the acquired image of the cooking space into a cooking operation state identification model of the cooking apparatus, and based on identifying that the cooking subject does not exist in the cooking space, control the display to provide, to the user, information on a cooking operation state corresponding to the state in which the cooking subject does not exist in the cooking space.

According to an aspect of the disclosure, a method for controlling a cooking apparatus, the method includes: acquiring, using a thermal imaging camera, an image of a cooking space provided in one area of the cooking apparatus, wherein a cooking subject is located in the image of the cooking space, and the image of the cooking space may include at least one area of the cooking space that is divided into a plurality of sub-areas; identifying, based on the acquired image, temperatures of each sub-area of the at least one area of the cooking space; and providing information on a state of a cooking operation of the cooking apparatus to a user based on the identified temperatures of each sub-area of the at least one area of the cooking space.

The method may further include: identifying the temperatures of each sub-area of the at least one area of the cooking space corresponding to a first number sub-areas on the image based on the acquired image until a temperature of the cooking space reaches a first temperature after the cooking operation of the cooking apparatus was initiated; and identifying the temperatures of each of the at least one area of the cooking space corresponding to areas of a second number on the image based on the acquired image until the temperature of the cooking space reaches a second temperature from the first temperature.

The method may further include: identifying the temperatures of each sub-area of the at least one area of the cooking space corresponding to a first number of sub-areas on the image based on the acquired image while a first time passes from a time point in which the cooking operation of the cooking apparatus was initiated; and identifying the temperatures of each sub-area of the at least one area of the cooking space corresponding to a second number of sub-areas on the image based on the acquired image while a second time passes from the time point in which the first time passed.

The second number is bigger than the first number, and the second temperature is bigger than the first temperature.

The method may further include: identifying whether a cooking operation part is in an abnormal state based on the identified temperatures of each sub-area of the at least one area of the cooking space; and based on identifying that the cooking operation part is in the abnormal state, providing information on the abnormal state of the cooking operation part to the user.

The method may further include: identifying one area of the cooking space having a temperature lower than the entire average temperature of the cooking space based on identified temperatures of each sub-area of the at least one area of the cooking space, and controlling the cooking operation part to raise the temperature of the one area by heating the one area.

The method may further included: identifying whether the cooking subject exists in the cooking space based on a change of the temperature of the cooking space from a time point at which the cooking operation of the cooking apparatus was initiated to a time point at which a predetermined time has passed, and based on identifying that the cooking subject does not exist in the cooking space, controlling the display to provide, to the user, information on a cooking operation state corresponding to a state in which the cooking subject does not exist in the cooking space.

The method may further include: identifying an abnormal state of a cooking operation part based on a vector value output by inputting the acquired image of the cooking space into a cooking operation state identification model of the cooking apparatus, and based on identifying that the cooking operation part is in an abnormal state, providing information on the abnormal state of the cooking operation part to the user.

The method may further include controlling a cooking operation part to heat one area of the cooking space having a temperature lower than an average temperature of the at least one area of the cooking space to raise the temperature of the one area based on a vector value output by inputting the acquired image of the cooking space into a cooking operation state identification model of the cooking apparatus.

According to an aspect of the disclosure, a non-transitory computer-readable recording medium storing computer instructions that are executable by a processor of a cooking apparatus perform a method for controlling the cooking apparatus, including: acquiring, using a thermal imaging camera, an image of a cooking space provided in one area of the cooking apparatus, wherein a cooking subject is located in the image of the cooking space, and the image of the cooking space includes at least one area of the cooking space that is divided into a plurality of sub-areas; identifying, based on the acquired image, temperatures of each sub-area of the at least one area of the cooking space; and providing information on a state of a cooking operation of the cooking apparatus to a user based on the identified temperatures of each sub-area of the at least one area of the cooking space.

### [Description of Drawings]

The above and other aspects, features, and advantages of certain embodiments of the present disclosure will be more apparent from the following description taken in conjunction with the accompanying drawings, in which:
FIG. 1 is a block diagram for illustrating a configuration of a cooking apparatus according to one or more embodiments of the disclosure;
FIG. 2a is a diagram for illustrating a cooking space provided in one area of a cooking apparatus and a thermal image of a cooking subject located in the cooking space according to one or more embodiments of the disclosure;
FIG. 2b is a diagram for illustrating a cooking space provided in one area of a cooking apparatus and a thermal image of a cooking subject located in the cooking space according to one or more embodiments of the disclosure;
FIG. 3a is a diagram for illustrating the temperatures of each of at least one area of a cooking space corresponding to at least one area of a thermal image according to one or more embodiments of the disclosure;
FIG. 3b is a diagram for illustrating the temperatures of each of at least one area of a cooking space corresponding to at least one area of a thermal image according to one or more embodiments of the disclosure;
FIG. 4 is a flow chart for illustrating an operation of identifying the temperatures of each temperature section of a cooking apparatus according to one or more embodiments of the disclosure;
FIG. 5a is diagram for illustrating a change of the number of at least one area of a thermal image according to one or more embodiments of the disclosure;
FIG. 5b is diagram for illustrating a change of the number of at least one area of a thermal image according to one or more embodiments of the disclosure;
FIG. 6 is a flow chart for illustrating an operation of identifying the temperatures of each time section of a cooking apparatus according to one or more embodiments of the disclosure;
FIG. 7a is a diagram for illustrating a cooking operation part of a cooking apparatus according to one or more embodiments of the disclosure;
FIG. 7b is a diagram for illustrating a cooking operation part of a cooking apparatus according to one or more embodiments of the disclosure;
FIG. 8a is a diagram for illustrating a state wherein a cooking subject is not located in a cooking space according to one or more embodiments of the disclosure;
FIG. 8b is a diagram for illustrating a correlation between the time that passed after a cooking operation was initiated and the temperature of a cooking space in the case of a state wherein a cooking subject is not located in the cooking space according to one or more embodiments of the disclosure;
FIG. 9 is a diagram for illustrating a cooking operation state identification model according to one or more embodiments of the disclosure;
FIG. 10 is a diagram for illustrating a cooking apparatus, a server, and a user terminal according to one or more embodiments of the disclosure;
FIG. 11 is a diagram for illustrating an operation that information on a cooking operation state of a cooking apparatus is transmitted to a user terminal and displayed according to one or more embodiments of the disclosure;
FIG. 12 is a block diagram for illustrating a configuration of a cooking apparatus according to one or more embodiments of the disclosure; and
FIG. 13 is a flow chart for illustrating an operation of a cooking apparatus according to one or more embodiments of the disclosure.

### [Mode for Invention]

Various modifications may be made to the embodiments of the disclosure, and there may be various types of embodiments. Accordingly, specific embodiments will be described in detail with reference to the drawings. However, it should be noted that the various embodiments are not for limiting the scope of the disclosure to a specific embodiment, but they should be interpreted to include various modifications, equivalents, and/or alternatives of the embodiments of the disclosure. Also, with respect to the detailed description of the drawings, similar components may be designated by similar reference numerals.

Also, in describing the disclosure, in case it is determined that detailed explanation of related known functions or components may unnecessarily confuse the gist of the disclosure, the detailed explanation will be omitted.

In addition, the embodiments below may be modified in various different forms, and the scope of the technical idea of the disclosure is not limited to the embodiments below. Rather, these embodiments are provided to make the disclosure more sufficient and complete, and to fully convey the technical idea of the disclosure to those skilled in the art.

Further, terms used in the disclosure are used just to explain specific embodiments, and are not intended to limit the scope of the other embodiments. Also, singular expressions include plural expressions, unless defined obviously differently in the context.

Also, in the disclosure, terms such as "have," "may have," "include," and "may include" denote that there are such characteristics (e.g.: elements such as numerical values, functions, operations, and components), and the terms do not exclude the existence of additional characteristics.

In addition, in the disclosure, the expressions "A or B," "at least one of A or B," "at least one of A and B," or "one or more of A and/or B" and the like may include all possible combinations of the listed items. For example, "A or B," "at least one of A and B," or "at least one of A or B" may refer to all of the following cases: (1) including A, (2) B, or (3) including both A and B.

Further, the expressions "first," "second," and the like used in the disclosure may be used to describe various elements regardless of any order and/or degree of importance. Also, such expressions are used only to distinguish one element from another element, and are not intended to limit the elements.

Also, the description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

In contrast, the description that one element (e.g.: a first element) is "directly coupled" or "directly connected" to another element (e.g.: a second element) may be interpreted to mean that still another element (e.g.: a third element) does not exist between the one element and the another element.

Also, the expression "configured to" used in the disclosure may be interchangeably used with other expressions such as "suitable for," "having the capacity to," "designed to," "adapted to," "made to," and "capable of," depending on cases. Meanwhile, the term "configured to" may not necessarily mean that an apparatus is "specifically designed to" in terms of hardware.

Instead, under some circumstances, the expression "an apparatus configured to" may mean that the apparatus "is capable of" performing an operation together with another device or component. For example, the phrase "a processor configured to perform A, B, and C" may mean a dedicated processor (e.g.: an embedded processor) for performing the corresponding operations, or a generic-purpose processor (e.g.: a CPU or an application processor) that can perform the corresponding operations by executing one or more software programs stored in a memory device.

In addition, in the embodiments, 'a module' or 'a part' may perform at least one function or operation, and may be implemented as hardware or software, or as a combination of hardware and software. Further, a plurality of "modules" or "parts" may be integrated into at least one module and implemented as at least one processor, excluding 'a module' or 'a unit' that needs to be implemented as specific hardware.

Meanwhile, various elements and areas in drawings were illustrated schematically. Accordingly, the technical idea of the disclosure is not limited by the relative sizes or intervals illustrated in the accompanying drawings.

Hereinafter, the embodiments of the disclosure will be described in detail with reference to the accompanying drawings, such that those having ordinary skill in the art to which the disclosure belongs can easily carry out the disclosure.

A cooking apparatus according to the disclosure may analyze an image acquired by using a thermal imaging camera, and provide information on a cooking operation state of the cooking apparatus to a user, or control a cooking operation.

The cooking apparatus may be an apparatus that cooks food by applying heat such as a microwave oven, an oven, an air-fryer, a fryer, a frying pan, etc., but is not limited thereto, and it may be various electronic apparatuses that are used to cook food.

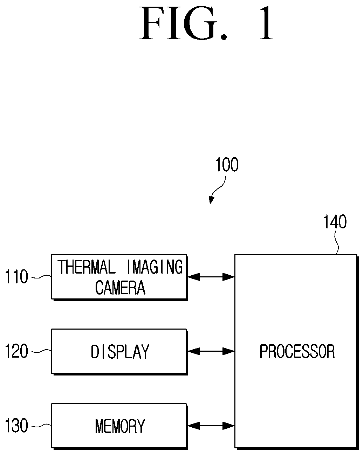

FIG. 1 is a block diagram for illustrating a configuration of a cooking apparatus 100 according to one or more embodiments of the disclosure.

Referring to FIG. 1, the cooking apparatus 100 may include a thermal imaging camera 110, a display 120, a memory 130, and at least one processor 140 (referred to as a processor 140 hereinafter). As understood by one of ordinary skill in the art, the components of the cooking apparatus 100 are not limited thereto, and various device components may be additionally included, or some of the components may be omitted.

The thermal imaging camera 110 may be a camera for acquiring an thermal image in which infrared rays emitted from a subject becomes a subject of photographing. The thermal imaging camera 110 may be a camera that is utilized in acquiring a thermal image by detecting radiation heat emitted by an object having heat.

The thermal imaging camera 110 may comprise at least one lens, an infrared sensor, an electronic processing device, etc., but is not limited thereto.

The lens of the thermal imaging camera 110 performs a role of focusing infrared rays emitted from a subject onto the sensor. The infrared sensor may include an infrared detector which is a focal plane array (FPA) arranged in the form of an array, and detect infrared rays and generate an electric signal. The electric signal corresponding to the detected infrared rays may be transmitted to the electronic processing device of the thermal imaging camera 110 or the processor 140 of the cooking apparatus 100 in which the thermal imaging camera 110 is included, and the electronic processing device of the thermal imaging camera 110 or the processor 140 of the cooking apparatus 100 may acquire a thermal image.

In one or more examples, a radiation amount detected by one infrared sensor may be expressed as a digital number or pixel intensity which is one pixel value.

An operation or a method by which the thermal imaging camera 110 generally acquires a thermal image is not necessarily limited to the above operation, and it may be implemented in various methods.

In one or more examples, a camera included in the cooking apparatus 100 is not necessarily a thermal imaging camera 110, and may be a general camera that senses visual rays and acquires an image, and other cameras that sense radio waves in various wavelengths and acquire an image.

The processor 140 may acquire thermal images for a cooking space that may be provided in one area of the cooking apparatus 100 and a cooking subject (e.g.: a food material, food, etc.) that may be located in the cooking space through the thermal imaging camera 110.

In one or more examples, the cooking space is a space in which a cooking subject is located and cooking of a cooking subject is performed by the cooking apparatus 100. The cooking subject may be located inside the cooking apparatus 100. The thermal imaging camera 110 may be arranged in the cooking space in which a cooking subject may be located or arranged to be adjacent to the cooking space.

The thermal imaging camera 110 may be a plurality of cameras. When there are a plurality of thermal imaging cameras 110, the plurality of thermal imaging cameras 110 may be arranged to be distanced by a predetermined distance or longer so as to acquire images of a cooking subject located in the cooking space in several angles. If there are a plurality of thermal imaging cameras 110, the plurality of thermal imaging cameras 110 may be arranged in different angles from one another inside or outside the cooking apparatus 100 so as to acquire images of a cooking subject located in the cooking space in various angles. Further, in case there are a plurality of thermal imaging cameras 110, the plurality of thermal imaging cameras 110 may acquire three-dimensional thermal images for the cooking space and a cooking subject located in the cooking space. As described above, in case there are a plurality of thermal imaging cameras 110, the plurality of thermal imaging cameras 110 may acquire a plurality of thermal images or three-dimensional images for a cooking subject in various angles.

The plurality of cameras may be implemented with the thermal imaging camera 110 and a camera of a different type from the thermal imaging camera 110 (e.g., a camera that senses radio waves in a visible ray area and an ultraviolet area and acquires an image). In case the plurality of cameras include cameras of different types from each other, the processor 140 may acquire not only thermal images but also visible ray RGB images, ultraviolet images, etc., in various angles, and acquire information on a cooking operation state from various viewpoints.

The location of the cooking space and the arrangement of the thermal imaging camera 110 are not limited to what is described above.

The display 120 may include display 120 panels of various types such as a liquid crystal display (LCD) panel, an organic light emitting diodes (OLED) panel, active-matrix organic light emitting diodes (AM-OLED), liquid crystal on silicon (LcoS), quantum dot light emitting diodes (QLED) and digital light processing (DLP), a plasma display panel (PDP), an inorganic LED panel, and a micro LED panel, etc., but the disclosure is not limited thereto. Meanwhile, the display 120 may constitute a touch screen together with a touch panel, or it may include a flexible panel.

The display 120 may be implemented as a square and a rectangle in a 2D form, but is not limited thereto. The display 120 may be implemented in various shapes such as a circle, a polygon, a 3D stereoscopic form, etc.,

The display 120 may be located in one area of the external surface of the cooking apparatus 100, but is not limited thereto.

The processor 140 may control the display 120 to output a text, a GUI, an image, or a video, etc.

Specifically, the processor 140 may control the display 120 to output information on the cooking apparatus 100, a cooking operation state of the cooking apparatus 100, whether the cooking operation part is in an abnormal state, or a cooking subject as a text, a GUI, an icon, an image, or a video, etc.

However, the disclosure is not limited thereto, and the processor 140 may control the display 120 to output various contents for providing information on a cooking operation state of the cooking apparatus 100 to the user.

The memory 130 stores various types of programs or data temporarily or nontemporarily, and transmits the stored information to the processor 140 according to a call of the processor 140. Also, the memory 130 may store various types of information necessary for operations, processing, or control operations of the processor 140 in electronic formats.

The memory 130 may include, for example, at least one of a main memory device or an auxiliary memory device. The main memory device may have been implemented by using a semiconductor storage medium such as a ROM and/or a RAM. The ROM may include, for example, a general ROM, an EPROM, an EEPROM, and/or a MASK-ROM, etc. The RAM may include, for example, a DRAM and/or an SRAM, etc. The auxiliary memory device may be implemented by using at least one storage medium that can store data permanently or semi-permanently like an optical recording medium such as a flash memory 130 device, a secure digital (SD) card, a solid state drive (SSD), a hard disc drive (HDD), a magnetic drum, a compact disc (CD), a DVD, or a laser disc, etc., a magnetic tape, a magnetooptical disc, and/or a floppy disc, etc.

The memory 130 may store information on the cooking apparatus 100, a cooking operation state of the cooking apparatus 100, a control instruction of the cooking operation part, whether the cooking operation part is in an abnormal state, or a cooking subject.

The memory 130 may store information on thermal images acquired through the thermal imaging camera 110, a neural network model identifying a cooking operation state of the cooking apparatus 100, a cooking space identified based on the thermal images, and the temperature of a cooking subject that may be located in the cooking space.

However, the information that may be stored by the memory 130 is not limited to what is described above, and the cooking apparatus 100 may store various types of information on the cooking apparatus 100 or a cooking operation state of the cooking apparatus 100.

The processor 140 controls the overall operations of the cooking apparatus 100. Specifically, the processor 140 is connected to the components of the cooking apparatus 100 including the memory 130 as described above, and may control the overall operations of the cooking apparatus 100 by executing at least one instruction stored in the memory 130 as described above. In particular, the processor 140 may not only be implemented as one processor 140, but may also be implemented as a plurality of processors 140.

The processor 140 may be implemented in various methods. For example, the at least one processor 140 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor 140 may control one or a random combination of the other components of the cooking apparatus 100, and perform an operation related to communication or data processing. Also, the at least one processor 140 may execute one or more programs or instructions stored in the memory 130. For example, the at least one processor 140 may perform the method according to one or more embodiments of the disclosure by executing at least one instruction stored in the memory 130.

In case the method according to one or more embodiments of the disclosure includes a plurality of operations, the plurality of operations may be performed by one processor 140, or performed by a plurality of processors 140. For example, when a first operation, a second operation, and a third operation are performed by the method according to one or more embodiments, each of the first operation, the second operation, and the third operation may be performed by a first processor 140. In one or more examples, the first operation and the second operation may be performed by the first processor 140 (e.g., a generic-purpose processor 140), and the third operation may be performed by a second processor 140 (e.g., an artificial intelligence-dedicated processor 140).

The at least one processor 140 may be implemented as a single core processor 140 including one core, or it may be implemented as one or more multicore processors 140 including a plurality of cores (e.g., multicores of the same kind or multicores of different kinds). In case the at least one processor 140 is implemented as multicore processors 140, each of the plurality of cores included in the multicore processors 140 may include an internal memory 130 of the processor 140 such as an on-chip memory 130, and a common cache shared by the plurality of cores may be included in the multicore processors 140. Also, each of the plurality of cores (or some of the plurality of cores) included in the multicore processors 140 may independently read a program instruction for implementing the method according to one or more embodiments of the disclosure and perform the instruction, or the plurality of entire cores (or some of the cores) may be linked with one another, and read a program instruction for implementing the method according to one or more embodiments of the disclosure and perform the instruction.

In case the method according to one or more embodiments of the disclosure includes a plurality of operations, the plurality of operations may be performed by one core among the plurality of cores included in the multicore processors 140, or they may be implemented by the plurality of cores. For example, when the first operation, the second operation, and the third operation are performed by the method according to one or more embodiments, each of the first operation, the second operation, and the third operation may be performed by a first core included in the multicore processors 140. In one or more examples, the first operation and the second operation may be performed by the first core included in the multicore processors 140, and the third operation may be performed by a second core included in the multicore processors 140.

In the embodiments of the disclosure, the processor 140 may comprise a system on chip (SoC) in which at least one processor 140 and other electronic components are integrated, a single core processor 140, a multicore processor 140, or a core included in the single core processor 140 or the multicore processor 140. Also, here, the core may be implemented as a CPU, a GPU, an APU, a MIC, a DSP, an NPU, a hardware accelerator, or a machine learning accelerator, etc., but the embodiments of the disclosure are not limited thereto.

The processor 140 may acquire an image of a cooking space which is provided in one area of the cooking apparatus 100 and in which a cooking subject may be located through the thermal imaging camera 110.

The processor 140 may identify the temperatures of each of at least one area of the cooking space corresponding to at least one area of the image based on the acquired image.

The processor 140 may control the display 120 to provide information on a cooking operation state of the cooking apparatus 100 to the user based on the identified temperatures of each area of the cooking space.

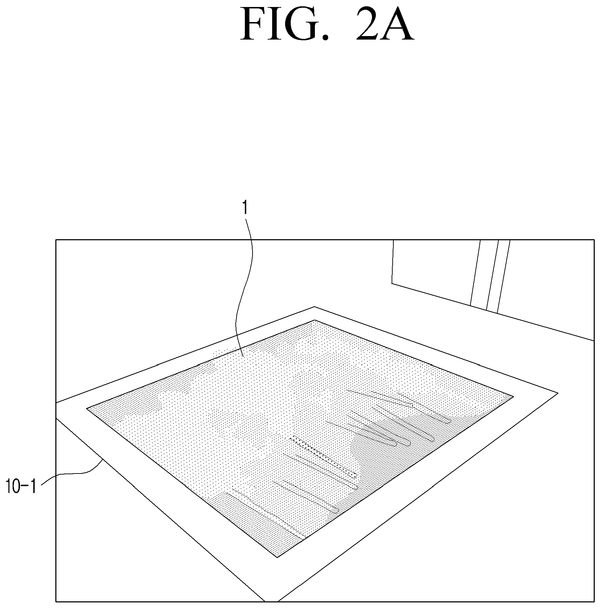

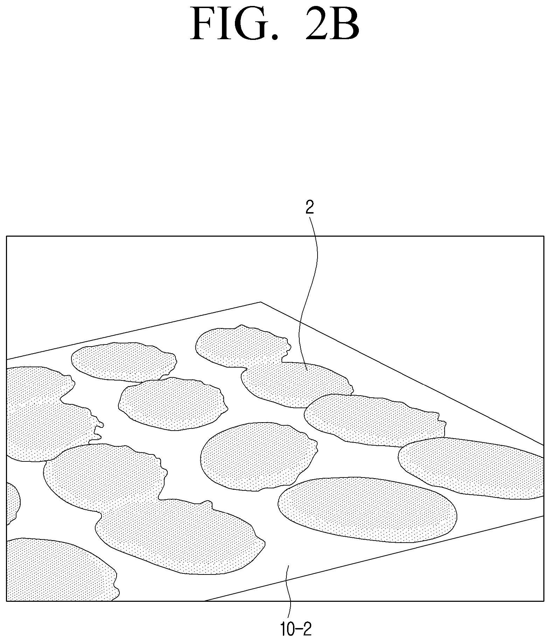

Explanation regarding control of the cooking apparatus 100 by the processor 140 will be described in more detail with reference to FIG. 2 to FIG. 12.

FIG. 2A illustrates a cooking space provided in one area of the cooking apparatus 100, and FIG. 2B illustrates a thermal image of a cooking subject located in the cooking space according to one or more embodiments of the disclosure.

Referring to FIG. 2A, in a cooking space 10-1 provided on one area of the cooking apparatus 100, cooking subject 1 to be cooked by the cooking apparatus 100 may be located or identified. Referring to FIG. 2B, in a cooking space 10-2, cooking subject 2 to be cooked by the cooking apparatus 100 may be located or identified. The cooking subjects may be, for example, meat skewered on a stick, hamburger patties, etc. In one or more examples, cooking spaces 10-1 and 10-2 may be separate areas on the cooking apparatus 100. In one or more examples, cooking spaces 10-1 and 10-2 may have one or more overlapping portions.

The processor 140 may acquire images of the cooking spaces 10-1, 10-2 which are provided on one area of the cooking apparatus 100 and in which the cooking subjects 1, 2 may be located, or images of the cooking subjects 1, 2 located in the cooking spaces 10-1, 10-2 through the thermal imaging camera 110. In one or more examples, the images may be thermal images, but are not limited thereto.

Areas having relatively higher temperatures on a thermal image may be expressed in colors such as red, orange, yellow, etc.. In FIG. 2A and FIG. 2B, areas having higher temperatures are expressed in brighter shades. For an area having a higher temperature, the brightness and the chroma of the area may be expressed to be higher in a thermal image.

In contrast, areas having relatively lower temperatures on a thermal image may be expressed in colors such as blue, violet, black, etc.. In FIG. 2A and FIG. 2B, areas having lower temperatures are expressed in darker shades. For an area having a lower temperature, the brightness and the chroma of the area may be expressed to be lower in a thermal image.

However, expressions of colors, brightness, and chroma of a thermal image are not limited to these configurations, and they may be expressed diversely according to predetermined values.

The processor 140 may identify the temperatures of each of the at least one area of the cooking space 10 corresponding to at least one area of the image based on the acquired image.

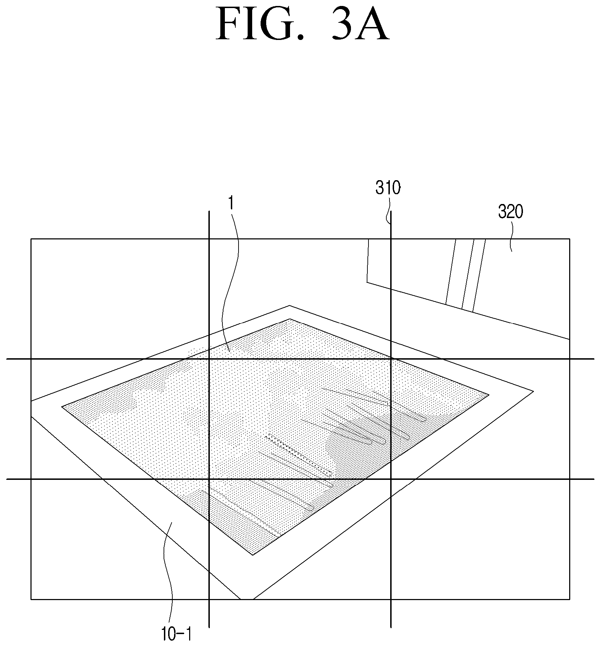

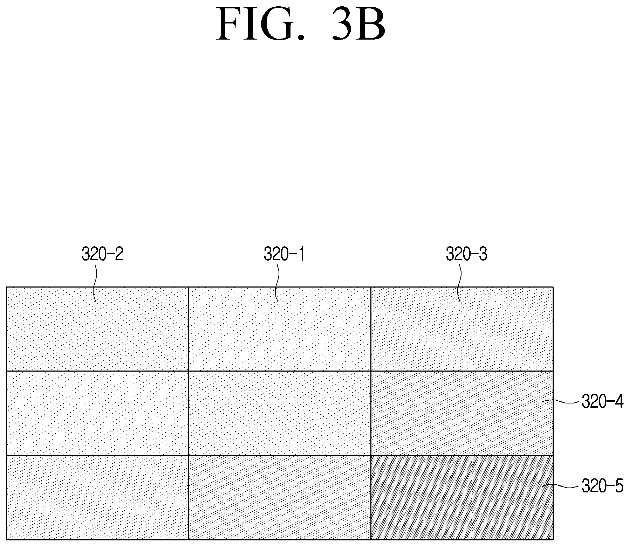

FIG. 3A and FIG. 3B are diagrams for illustrating the temperatures of each of at least one area of the cooking space 10 corresponding to at least one area of a thermal image according to one or more embodiments of the disclosure.

Referring to FIG. 3A, an acquired image may include an area 320 divided into a plurality of sub-areas by at least one line 310. For example, as illustrate in FIGs. 3A and 3B, an image have an area 320 is divided into 9 sub-areas. When there is no line 310 dividing the acquired image, the acquired image may be treated as having one area as a whole.

In one or more examples, the line 310 dividing the acquired image may be a straight line, but is not limited thereto, and it may include a curved line, a closed curved line, etc. In one or more examples, the individual sub-areas on the image divided by the line 310 may be a rectangle, but is not limited thereto, and it may be in various shapes such as a triangle, a circle, an oval, a polygon, etc.

Referring to FIG. 3B, the processor 140 may identify the temperatures of at least one area of the cooking space 10 corresponding to the at least one sub-area on the image based on the acquired image.

Specifically, the processor 140 may identify the temperature of the area 320 for each sub-area included in the thermal image, or acquire temperature information of the area 320.

In one or more examples, the processor 140 may acquire image data in which the area 320 included in the image is implemented in a color corresponding to the identified average temperature of each sub-area, and control the display 120 to output the acquired image data and provide it to the user.

In one or more examples, the processor 140 may acquire image data in which an sub-area 320-1 having relatively the highest temperature consists of a red color, an sub-area 320-2 having the second highest temperature consists of an orange color, an sub-area 320-3 having the third highest temperature consists of a yellow color, an sub-area 320-4 having the fourth highest temperature consists of a blue color, and an sub-area 320-5 having the fifth highest temperature consists of a navy color, for each sub-area area included in the image data, and control the display 120 to output the acquired image data and provide it to the user.

The processor 140 may control the display 120 to acquire or output image data in which the sub-area 320-1 having relatively the highest temperature is expressed as relatively the brightest shade, and the sub-area 320-5 having relatively the lowest temperature is expressed as relatively the darkest shade, for each sub-area included in the image data as in FIG. 3B. For example, the processor 140 may control the display 120 to acquire or output image data in which an area having a higher temperature is expressed as a brighter shade, and an area having a lower temperature is expressed as a darker shade as in FIG. 3B.

In one or more examples, the expression of colors or the expression of the degree of darkness of shades in the image data is not limited to what is described above, and various color expressions, shade expressions, pattern expressions, etc. that can express relative temperature differences may be used.

The colors of each sub-area included in the image data indicate the relative highness or lowness of temperatures, but the disclosure is not limited thereto, and the colors may be expressed to indicate an absolute temperature.

In one or more examples, colors constituting the image data described above are not limited to what is described above, and various colors may be utilized.

The operation of the processor 140 of acquiring image data corresponding to the temperatures of each sub-area of the area 320 included in an acquired image is not limited to what is described above, and the operation may be implemented as an operation of acquiring code data in which the area 320 included in the image is implemented as a random code corresponding to the identified average temperature of each sub-area (e.g.: data corresponding to the absolute temperature, data corresponding to a relative temperature difference, etc.).

For example, the processor 140 may acquire image data or code data in which the acquired thermal image is simplified. By using the simplified image data or code data as above, the processor 140 can perform operations regarding the temperature information for each area of the cooking space 10 swiftly and effectively, or provide more intuitive temperature visualization information for each area of the cooking space 10 to the user.

The operation of identifying the temperatures of each sub-area of the area 320 of the cooking space 10 corresponding to the area 320 of an acquired image based on the image acquired through the thermal imaging camera 110 may be further specified according to a change of the temperature of the cooking space 10 or passage of time.

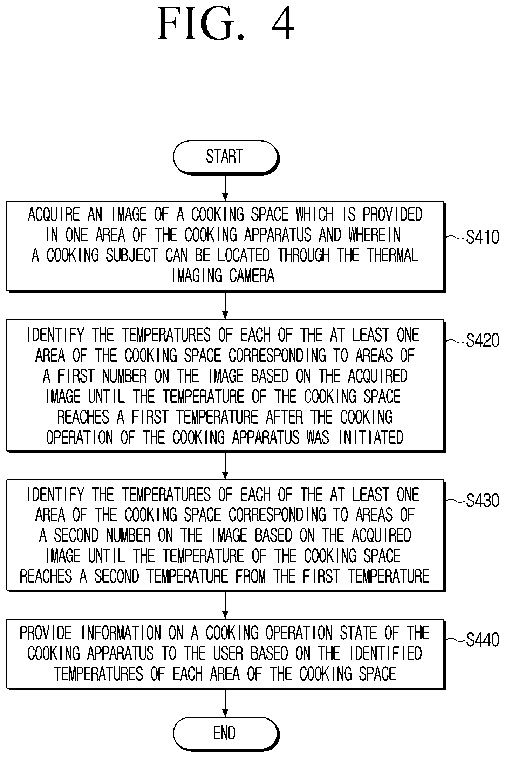

FIG. 4 is a flow chart for illustrating an operation of identifying the temperatures of each temperature section of the cooking apparatus 100 according to one or more embodiments of the disclosure.

Referring to FIG. 4, the processor 140 may acquire an image of the cooking space 10 which is provided in one area of the cooking apparatus 100 and in which the cooking subjects 1, 2 may be located through the thermal imaging camera 110 in operation S410. In one or more examples, the acquired image may be a thermal image, but is not limited thereto, and it may be an image that was acquired by sensing visible rays, or sensing radio waves having different wavelengths from visible rays and infrared rays. The image may include an area divided into a plurality of sub-areas.

In operation 420, the processor 140 may identify the temperatures of each sub-area of the area of the image of the cooking space 10 corresponding to a first number of sub-areas on the image based on the acquired image until the temperature of the cooking space 10 reaches a first temperature after the cooking operation of the cooking apparatus 100 was initiated. In one or more examples, the first number may be a random natural number. Also, as the first number increases in value, the acquired image is divided into more areas, and thus, the sub-area of the one area becomes smaller.

The processor 140 may identify the temperatures of each sub-area of the area of the cooking space 10 corresponding to a second number of sub-areas on the image based on the acquired image until the temperature of the cooking space reaches a second temperature from the first temperature in operation S430.

The second temperature may be a temperature higher than the first temperature, but is not limited thereto, and the second temperature may be a temperature lower than the first temperature. Also, the second temperature may be a cooking set temperature or a target temperature for the cooking apparatus 100 to perform a cooking operation.

The second number may be a natural number bigger than the first number, but is not limited thereto, and the second number may be a natural number smaller than the first number.

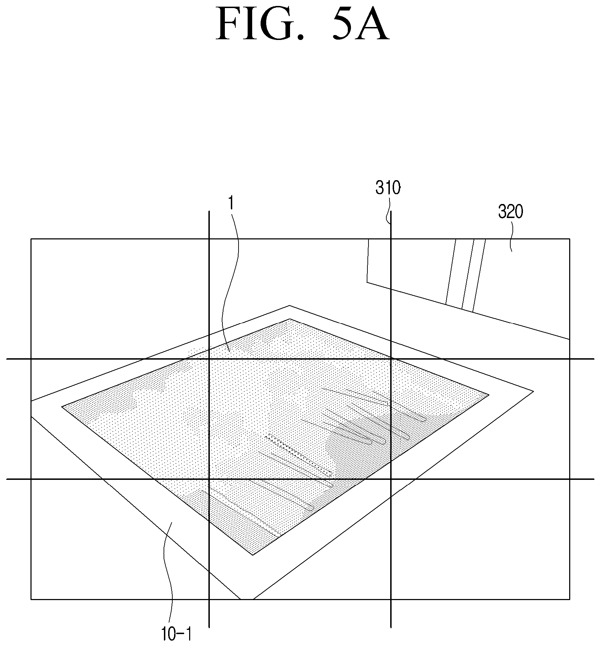

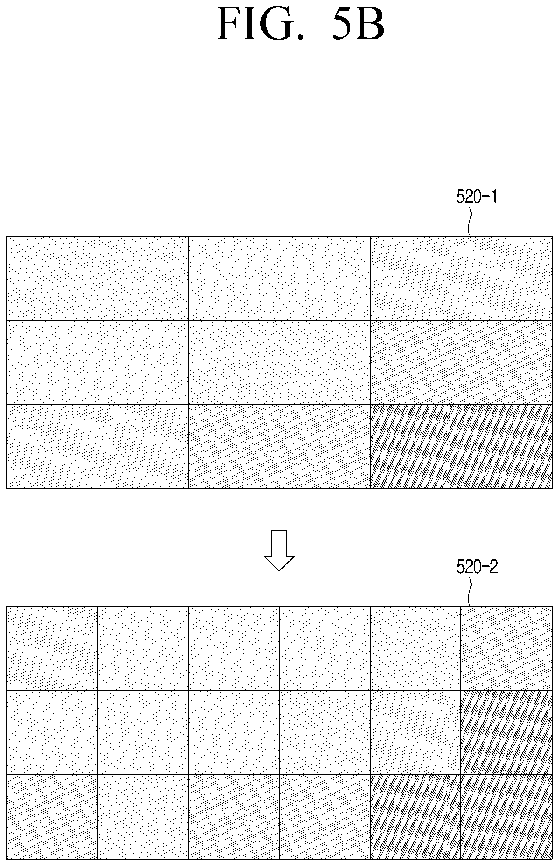

FIG. 5A and FIG. 5B are diagrams for illustrating a change of the number of at least one area of a thermal image according to one or more embodiments of the disclosure.

Referring to FIG. 5A, an acquired image may include at least one area 320 divided by at least one line 310.

Referring to FIG. 5B, the processor 140 may identify the temperatures of each of the at least one area of the cooking space 10 corresponding to the at least one area 320 on the image based on the acquired image.

When the second number is a number bigger than the first number, the processor 140 may identify the temperatures of each sub-area of the cooking space 10 corresponding to area 320 divided in a relatively fewer number on the image based on the acquired image until the initial stage after the cooking operation was initiated, (e.g., the first temperature), and can thereby perform an operation by improving the operation speed of the processor 140 and consuming less energy. For example, in the initial stage after the cooking operation was initiated, the cooking apparatus 100 may operate by prioritizing the operation speed, the operation efficiency, etc. of the processor 140 rather than accuracy of control of a cooking operation and information regarding a cooking operation state.

In contrast, when the temperature got close to the second temperature, which is the set temperature, the processor 140 may identify the temperatures of each sub-area of the cooking space 10 corresponding to area 320 divided in a relatively larger number on the image based on the acquired image. Accordingly, in a state in which the temperature got close to the second temperature, which is the set temperature, the processor 140 may identify the temperatures of each sub-area of the cooking space 10 more minutely and correctly, and can thereby control a cooking operation more correctly or provide more correct information on a cooking operation state to the user.

The processor 140 may control the display 120, or control the speaker 180 to provide information on a cooking operation state of the cooking apparatus 100, e.g., information on whether a cooking subject is not located in the cooking space 10, whether the cooking operation part of the cooking space 10 is in an abnormal state, etc. to the user based on the identified temperatures of each area of the cooking space 10 in operation S440.

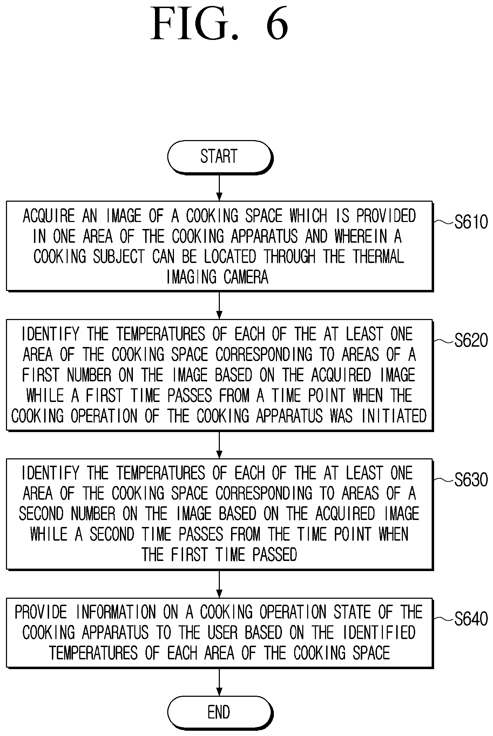

FIG. 6 is a flow chart for illustrating an operation of identifying the temperatures of each time section of the cooking apparatus 100 according to one or more embodiments of the disclosure.

Referring to FIG. 6, the processor 140 may acquire an image of the cooking space 10 which is provided in one area of the cooking apparatus 100 and in which the cooking subjects 1, 2 may be located through the thermal imaging camera 110 in operation S610. Here, the acquired image may be a thermal image, but is not limited thereto, and it may be an image that was acquired by sensing visible rays, or sensing radio waves having different wavelengths from visible rays and infrared rays.

The processor 140 may identify the temperatures of each of the at least one area of the cooking space 10 corresponding to areas of a first number on the image based on the acquired image while a first time passes from a time point when the cooking operation of the cooking apparatus 100 was initiated in operation S620. Here, the first number may be a random natural number. Also, as the first number increases in value, the acquired image is divided into more areas, and thus, the area of the one area becomes smaller.

The processor 140 may identify the temperatures of each sub-area of the area of the cooking space 10 corresponding to a second number of sub-areas on the image based on the acquired image while a second time passes from the time point when the first time passed in operation S630.

The second temperature may be a temperature higher than the first temperature, but is not limited thereto, and the second temperature may be a temperature lower than the first temperature. Also, the second temperature may be a cooking set temperature or a target temperature for the cooking apparatus 100 to perform a cooking operation.

The second number may be a natural number bigger than the first number, but is not limited thereto, and the second number may be a natural number smaller than the first number.

Referring to FIG. 5A, the acquired image may include at least one area 320 divided by at least one line 310.

Referring to FIG. 5B, the processor 140 may identify the temperatures of each of the at least one area of the cooking space 10 corresponding to the at least one area 320 of the image based on the acquired image.

When the second number is a number bigger than the first number, the processor 140 may identify the temperatures of each area of the cooking space 10 corresponding to each sub-area divided in a relatively fewer number on the image based on the acquired image until the initial stage after the cooking operation was initiated(e.g., the time point when the first time passed), and can thereby perform an operation by improving the operation speed of the processor 140, and with less energy consumption. For example, in the initial stage after the cooking operation was initiated, the cooking apparatus 100 may operate by prioritizing the operation speed, the operation efficiency, etc. of the processor 140 rather than accuracy of control of a cooking operation and information regarding a cooking operation state.

In contrast, when it is close to a time point when the second time passed that is closer to the set temperature, the processor 140 may identify the temperatures of each area of the cooking space 10 corresponding to each area 320 divided in a relatively larger number on the image based on the acquired image. Accordingly, in a state in which it is close to the time point when the second time passed, the processor 140 may identify the temperatures of each area of the cooking space 10 more minutely and correctly, and can thereby control a cooking operation more correctly or provide more correct information on a cooking operation state to the user.

The processor 140 may control the display 120, or control the speaker 180 to provide information on a cooking operation state of the cooking apparatus 100 (e.g., information on whether the cooking subjects 1, 2 are not located in the cooking space 10, whether the cooking operation part of the cooking space 10 is in an abnormal state, etc. to the user based on the identified temperatures of each area of the cooking space 10 in operation S640.

In one or more examples, the cooking apparatus 100 may additionally include a cooking operation part that can transmit heat to the cooking subjects 1, 2 or change the locations or the directions of the cooking subjects 1, 2, and the processor 140 may control a cooking operation by controlling the cooking operation part of the cooking apparatus 100 based on the identified temperatures of each area of the cooking space 10.

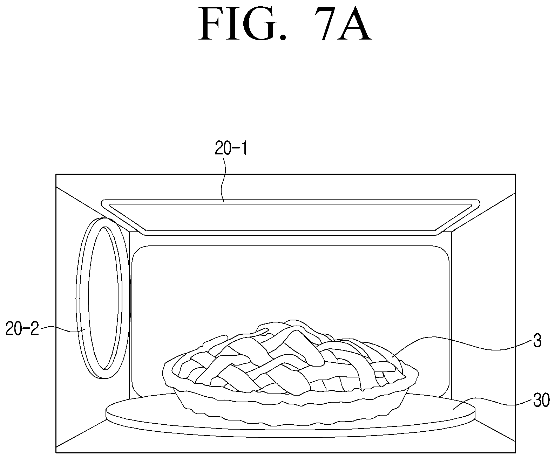

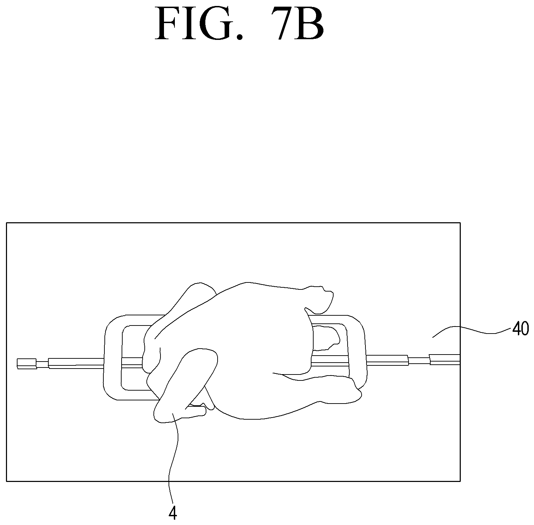

FIG. 7A and FIG. 7B are diagrams for illustrating a cooking operation part of the cooking apparatus 100 according to one or more embodiments of the disclosure.

Referring to FIG. 7A, the cooking operation part may include heating parts 20-1, 20-2 that transmit heat through radiation energy or electromagnetic waves (e.g.: microwaves) to a cooking subject 3 located in the cooking space 10, or a turn table 30 that rotates while the cooking subject 3 is placed and receives heat evenly from the heating parts 20-1, 20-2.

The heating parts 20-1, 20-2 may be arranged on the internal wall surface of the cooking apparatus 100 constituting the cooking space 10, but the arrangement of the heating parts 20-1, 20-2 is not limited thereto.

The turn table 30 may be implemented as a circle and rotate with the center of the circle as the axis, but the shape of the turn table 30 and the location of the rotation axis are not limited thereto.

Referring to FIG. 7B, the cooking operation part may be a bar 40 that is inserted into a cooking subject 4 to penetrate the cooking subject 4 so as to change the location or the direction of the cooking subject 4 located in the cooking space 10, or a clip that grabs one area of the cooking subject 4 and fixes it. Here, the bar 40 or the clip may be fixed on one side of the cooking space 10 and rotate with the rotation axis as the center, and the cooking subject 4 through which the bar 40 penetrated or the cooking subject 4 fixed with the clip may be rotated, and may be made to receive heat evenly from the heating part.

The processor 140 may identify whether the cooking operation parts 20, 30, 40 are in an abnormal state based on the identified temperatures of each of the at least one area of the cooking space 10.

Specifically, the processor 140 may identify one area wherein the temperature difference from an adjacent area is greater than or equal to a predetermined value or one area having a temperature lower than the entire average temperature of the cooking space 10 among the identified temperatures of each of the at least one area of the cooking space 10 based on the identified temperatures of each of the at least one area of the cooking space 10.

Specifically, the area may be a portion of the cooking space 10in which heat is not transmitted normally to the cooking subjects 1, 2, 3, 4. If one area wherein the temperature difference from an adjacent area is greater than or equal to a predetermined value or one area having a temperature lower than the entire average temperature of the cooking space 10 is identified, the processor 140 may identify that the cooking operation parts 20, 30, 40 changing the locations or the directions of the cooking subjects 1, 2, 3, 4 such that the cooking subjects 1, 2, 3, 4 located in the one area can receive heat evenly are in an abnormal state in which they do not operate normally.

Here, the abnormal state may be a state in which the cooking operation parts 20, 30, 40 do not operate normally, or a state in which some of the cooking operation parts 20, 30, 40 broke down, or a state in which the cooking operation parts 20, 30, 40 are not bound well in the cooking space 10, but is not limited thereto.

If the cooking operation parts 20, 30, 40 are identified to be in an abnormal state, the processor 140 may control the display 120 or control the speaker 180 to provide information on the abnormal state of the cooking operation parts 20, 30, 40 to the user.

The processor 140 may identify one area of the cooking space 10 having a lower temperature than the entire average temperature of the cooking space 10 based on the identified temperatures of each of the at least one area of the cooking space 10. In one or more examples, the processor 140 may identify one area of which temperature is lower than an adjacent area by greater than or equal to the predetermined value in the cooking space 10 based on the identified temperatures of each of the at least one area of the cooking space 10 based on an acquired image.

The processor 140 may control the cooking operation parts 20, 30 to heat one area having a lower temperature than the entire average temperature of the cooking space 10 or one area of which temperature is lower than an adjacent area by greater than or equal to the predetermined value to raise the temperature of the one area.

Specifically, the processor 140 may individually control each heating part 20-1, 20-2 to apply heat through radiation energy to one area of the cooking subject 3 located in the cooking space 10. The processor 140 may identify the heating parts 20-1, 20-2 provided in locations in which they can apply heat to one area having a relatively lower temperature than the other areas based on the identified temperatures of each area of the cooking space 10, and control the identified heating parts 20-1, 20-2 to apply heat to the cooking subject 3.

In one or more examples, the processor 140 may rotate the cooking subject 3 located on the turn table 30 by controlling the turn table 30 to rotate around the rotation axis in the cooking space 10, and may thereby make heat applied to one area of the cooking subject 3 having a relatively lower temperature than the other areas based on the identified temperatures of each area of the cooking space 10.

In one or more examples, the processor 140 may rotate the bar 40 that penetrated the cooking subject 4 or the clip fixing the cooking subject 4 by controlling them to rotate around the rotation axis, and may thereby make heat applied to one area of the cooking subject 4 having a relatively lower temperature than the other areas based on the identified temperatures of each area of the cooking space 10.

As described above, the processor 140 may control the cooking operation parts 20, 30, 40 based on the identified temperatures of each area of the cooking space 10, or control the display 120 or control the speaker 180 to provide information on the abnormal state of the cooking operation parts 20, 30, 40 to the user.

The processor 140 may identify whether cooking subjects 1, 2, 3, 4 exist in the cooking space 10 based on a change of the temperature of the cooking space 10 from a time point when the cooking operation of the cooking apparatus 100 was initiated to a time point when a predetermined time passed. If it is identified that there are no cooking subjects 1, 2, 3, 4 in the cooking space 10, the processor 140 may control the display 120 or the speaker 180 to provide information on a cooking operation state corresponding to the state in which the cooking subjects 1, 2, 3, 4 do not exist in the cooking space 10 to the user.

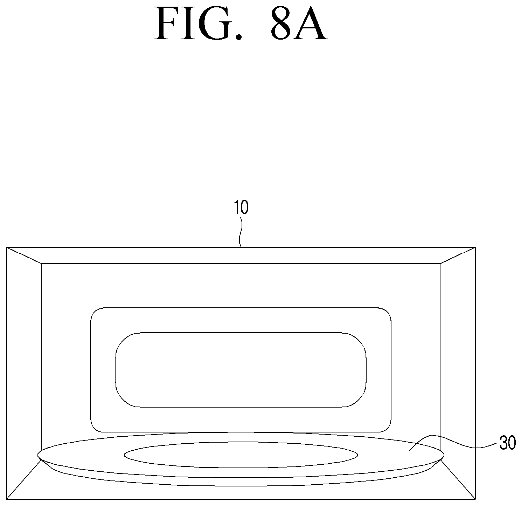

FIG. 8A is a diagram for illustrating a state in which a cooking subject is not located in the cooking space 10 according to one or more embodiments of the disclosure.

Referring to FIG. 8A, in case cooking subjects 1, 2, 3, 4 do not exist in the cooking space 10, the cooking apparatus 100 may be damaged by applying a load of radiation energy or electromagnetic waves when cooking subjects do not exist in a cooking space.

Accordingly, it is necessary that the processor 140 performs an operation of identifying whether cooking subjects 1, 2, 3, 4 exist in the cooking space 10, and providing information on a cooking operation state to the user or turning off the power of the cooking apparatus 100.

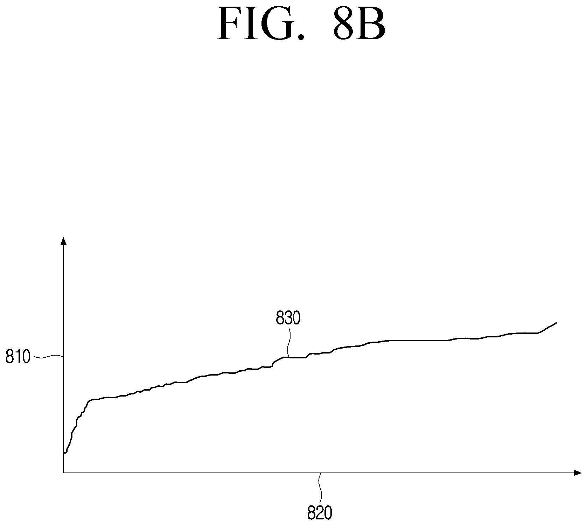

FIG. 8B is a diagram for illustrating a correlation between the time that passed after a cooking operation was initiated and the temperature of the cooking space 10 in the case of a state in which cooking subjects 1, 2, 3, 4 are not located in the cooking space 10 according to one or more embodiments of the disclosure.

Referring to FIG. 8B, the horizontal axis may be a time axis, and the vertical axis may be a temperature axis. However, the disclosure is not limited thereto, and the horizontal axis may be a temperature axis, and the vertical axis may be a time axis. The processor 140 may identify a change of the temperature 830 of the cooking space 10 according to passage of time.

The processor 140 may identify a change of the temperature of the cooking space 10 according to a change of time. If it is identified that the change rate of the average temperature of the cooking space 10 according to a change of time does not exceed a predetermined range, the processor 140 may identify that cooking subjects 1, 2, 3, 4 do not exist in the cooking space 10, and thus the load of the cooking apparatus 100 is not applied on the cooking subjects 1, 2, 3, 4.

If it is identified that the cooking subjects 1, 2, 3, 4 do not exist in the cooking space 10, the processor 140 may perform an operation of providing information on a cooking operation state including a content that the cooking subjects 1, 2, 3, 4 do not exist in the cooking space 10 to the user or turning off the power of the cooking apparatus 100.

The aforementioned operations of the processor 140 of identifying the temperature of the cooking space 10, controlling the cooking operation parts 20, 30, 40, and providing information on a cooking operation state may be performed by using an artificial intelligence model or a neural network model (e.g.: a cooking operation state identification model).

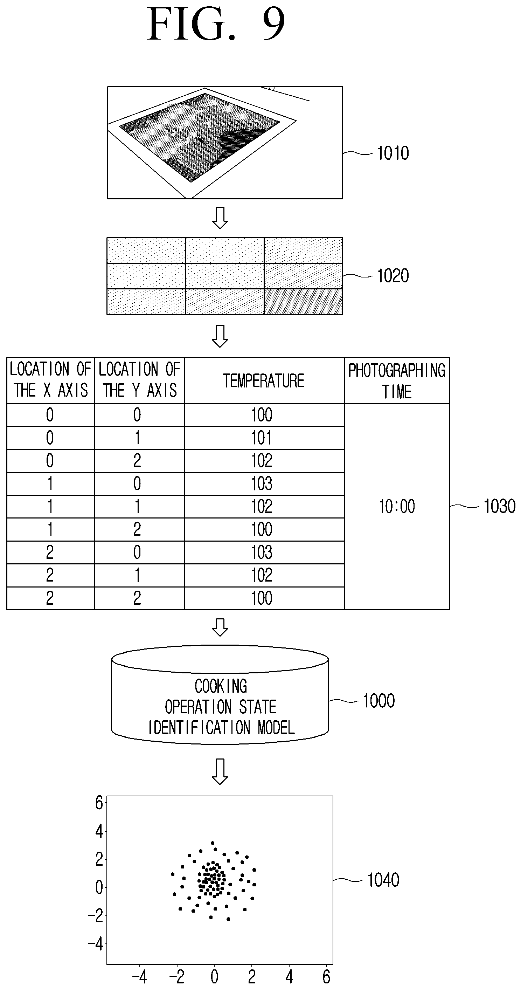

FIG. 9 is a diagram for illustrating a cooking operation state identification model according to one or more embodiments of the disclosure.

Referring to FIG. 9, the processor 140 may input information on the temperatures of each area of the cooking space 10 acquired based on a thermal image 1010 or information on the temperatures 1030 of each area of the cooking space 10 according to time into a cooking operation state identification model 1000.

For example, the input data of the cooking operation state identification model 1000 may be the information on the temperatures of each area of the cooking space 10 acquired based on a thermal image or the information on the temperatures of each area of the cooking space 10 according to time, but is not limited thereto, and the input data may be image data or code data 1020 corresponding to the thermal image 1010 or the temperatures of each area of the cooking space 10 acquired based on the thermal image 1010.

The processor 140 may acquire information on a cooking operation state based on a vector value 1040 in a potential space output from the cooking operation state identification model 1000 and control the display 120 or the speaker 180 to provide the information to the user. Also, the processor 140 may control the cooking operation parts 20, 30, 40 based on the vector value 1040 in the potential space output from the cooking operation state identification model 1000.

As a specific example, the processor 140 may identify an abnormal state of the cooking operation parts 20, 30, 40 based on the vector value 1040 output by inputting an acquired image 1010 of the cooking space 10 into the cooking operation state identification model 1000 of the cooking apparatus 100.

However, the disclosure is not limited thereto, and the processor 140 may identify an abnormal state of the cooking operation parts 20, 30, 40 based on the vector value 1040 output by inputting the image data or the code data 1020 of the temperatures of each area, or the information on the temperatures of each area of the cooking space 10 acquired from the image 1010, or the information on the temperatures 1030 of each area of the cooking space 10 according to time into the cooking operation state identification model 1000. If the cooking operation parts 20, 30, 40 are identified to be in an abnormal state, the processor 140 may control the display 120 or the speaker 180 to provide information on the abnormal state of the cooking operation parts 20, 30, 40 to the user.

Also, the processor 140 may control the cooking operation parts 20, 30, 40 to heat one area of the cooking space 10 having a lower temperature than the average temperature of each of the at least one area of the cooking space 10 based on the vector value 1040 output by inputting the acquired image 1010 of the cooking space 10 in the cooking operation state identification model 1000 of the cooking apparatus 100 to raise the temperature of the one area.

However, the disclosure is not limited thereto, and the processor 140 may control the cooking operation parts 20, 30, 40 to heat one area of the cooking space 10 having a lower temperature than the average temperature of each of the at least one area of the cooking space 10 based on the vector value 1040 output by inputting the image data or the code data 1020 of the temperatures of each area, or the information on the temperatures of each area of the cooking space 10 acquired from the image 1010, or the information on the temperatures 1030 of each area of the cooking space 10 according to time into the cooking operation state identification model 1000 to raise the temperature of the one area.

In one or more examples, the processor 140 may identify one area of the cooking space 10 having a temperature lower than an adjacent area by greater than or equal to the predetermined value based on the vector value 1040 output by inputting the acquired image 1010 of the cooking space 10 into the cooking operation state identification model 1000 of the cooking apparatus 100, and the processor 140 may control the cooking operation parts 20, 30, 40 to raise the temperature of the identified one area.

However, the disclosure is not limited thereto, and the processor 140 may identify one area of the cooking space 10 having a temperature lower than an adjacent area by greater than or equal to the predetermined value based on the vector value 1040 output by inputting the image data or the code data 1020 of the temperatures of each area, or the information on the temperatures of each area of the cooking space 10 acquired from the image 1010, or the information on the temperatures 1030 of each area of the cooking space 10 according to time into the cooking operation state identification model 1000, and the processor 140 may control the cooking operation parts 20, 30, 40 to raise the temperature of the identified one area.

In one or more examples, the processor 140 may identify whether cooking subjects 1, 2, 3, 4 exist in the cooking space 10 based on the vector value 1040 output by inputting the acquired image 1010 of the cooking space 10 into the cooking operation state identification model 1000 of the cooking apparatus 100.

However, the disclosure is not limited thereto, and the processor 140 may identify whether cooking subjects 1, 2, 3, 4 exist in the cooking space 10 based on the vector value 1040 output by inputting the image data or the code data 1020 of the temperatures of each area, or the information on the temperatures of each area of the cooking space 10 acquired from the image 1010, or the information on the temperatures 1030 of each area of the cooking space 10 according to time into the cooking operation state identification model 1000.

If it is identified that there are no cooking subjects in the cooking space 10, the processor 140 may control the display 120 or the speaker 180 to provide information on a cooking operation state corresponding to the state in which the cooking subjects 1, 2, 3, 4 do not exist in the cooking space 10 to the user.

The operation of identifying the temperatures of each area of the cooking space 10 of the cooking apparatus 100, the operation of providing information on a cooking operation state, and the operation of controlling the cooking operation parts 20, 30, 40 described above may be performed by the processor 140 of the cooking apparatus 100 independently in the cooking apparatus 100. However, the disclosure is not limited thereto, and in case the cooking apparatus 100 includes a communication interface 150, the processor 140 may perform communicative connection with an external server, an external device, or a user terminal through the communication interface 150, and perform the operation of identifying the temperatures of each area of the cooking space 10, the operation of providing information on a cooking operation state, and the operation of controlling the cooking operation parts 20, 30, 40.

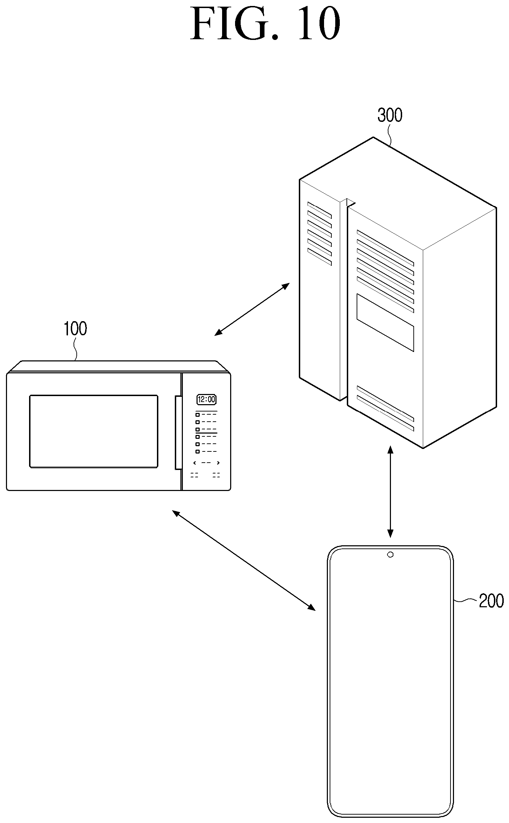

FIG. 10 is a diagram for illustrating the cooking apparatus 100, a server, and a user terminal according to one or more embodiments of the disclosure.

Referring to FIG. 10, the processor 140 of the cooking apparatus 100 may perform communicative connection with a user terminal 200 through the communication interface 150, or perform communicative connection with an external server 300.

The processor 140 may acquire an image of the cooking space 10 through the thermal imaging camera 110 or other cameras or sensors. The processor 140 may establish a connection with the external server 300 through the communication interface 150, and transmit the acquired image. After the external server 300 receives the image from the cooking apparatus 100, the external server 300 may identify the temperatures of each area of the cooking space 10 of the cooking apparatus 100 based on the received image, and acquire information on a cooking operation state. Afterwards, the processor 140 may perform communicative connection with the external server 300 through the communication interface 150, and receive the temperatures of each area of the cooking space 10 of the cooking apparatus 100, the information on the cooking operation state, or control information of the cooking operation parts 20, 30, 40. However, the disclosure is not limited thereto, and the processor 140 may perform communicative connection with the external server 300 through the communication interface 150, and transmit or receive various types of information related to the identification of the temperatures of the cooking space 10 and the information regarding the cooking operation state.

The processor 140 may control the display 120 or the speaker 180 to provide the information on the temperatures of each area of the cooking space 10 and the information on the cooking operation state received from the external server 300 through the communication interface 150 to the user. The processor 140 may control the cooking operation parts 20, 30, 40 based on the control information of the cooking operation parts 20, 30, 40 of the cooking apparatus 100 received from the external server 300 through the communication interface 150.

The processor 140 may establish a connection with the user terminal 200 through the communication interface 150, and transmit the information on the temperatures of each area of the cooking space 10, the information on the cooking operation state, or images of the cooking subjects 1, 2, 3, 4 located in the cooking space 10 to the user terminal 200 such that they are output as visual information or auditory information at the user terminal 200.

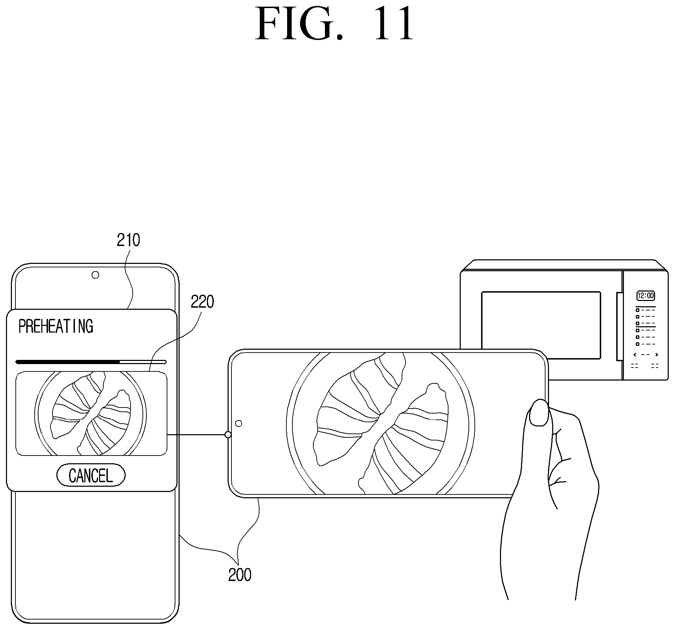

FIG. 11 is a diagram for illustrating an operation that information on a cooking operation state of a cooking apparatus 100 is transmitted to a user terminal and displayed 120 according to one or more embodiments of the disclosure.

Referring to FIG. 11, the processor 140 may establish a connection with the user terminal 200 through the communication interface 150, and transmit the information on the temperatures of each area of the cooking space 10 and the information on the cooking operation state to the user terminal 200 such that a text or a GUI 210 corresponding to the information on the temperatures of each area of the cooking space 10 and the information on the cooking operation state, and an image 220 of the cooking subjects 1, 2, 3, 4 located in the cooking space 10 are output on the screen of the user terminal 200.

Also, the processor 140 may perform communicative connection with the user terminal 200 through the communication interface 150, and receive control information of the cooking operation parts 20, 30, 40 of the cooking apparatus 100 from the user terminal 200. The processor 140 may control the cooking operation parts 20, 30, 40 based on the control information of the cooking operation parts 20, 30, 40 of the cooking apparatus 100 received from the external server 300 through the communication interface 150.

The information that the processor 140 transmits to or receives from the user terminal 200 through the communication interface 150 is not limited to what is described above, and various types of information for performing of operations by the cooking apparatus 100 may be transmitted to the user terminal 200, or received from the user terminal 200.

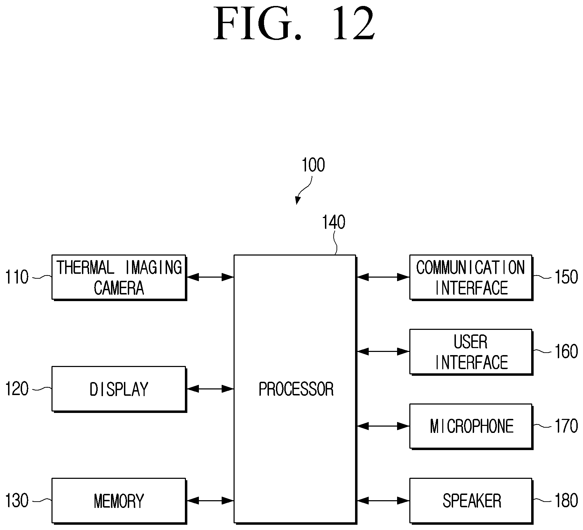

FIG. 12 is a block diagram for illustrating a configuration of the cooking apparatus 100 according to one or more embodiments of the disclosure.

Referring to FIG. 12, the communication interface 150 may include a wireless communication interface, a wired communication interface, or an input interface. The wireless communication interface may perform communication with various types of external apparatuses by using a wireless communication technology or a mobile communication technology. As such a wireless communication technology, for example, Bluetooth, Bluetooth low energy, CAN communication, Wi-Fi, Wi-Fi Direct, ultrawide band (UWB) communication, Zigbee, infrared Data Association (IrDA), or near field communication (NFC), etc. may be included, and as a mobile communication technology, 3GPP, Wi-Max, long term evolution (LTE), 5G, etc. may be included.

The wireless communication interface may be implemented by using an antenna that can transmit electromagnetic waves to the outside or receive electromagnetic waves transmitted from the outside, a communication chip, and a substrate, etc.

The wired communication interface may perform communication with various types of external apparatuses based on a wired communication network. Here, the wired communication network may be implemented by using a physical cable such as a pair cable, a coaxial cable, an optical fiber cable, or an Ethernet cable, etc.

Any one of the wireless communication interface or the wired communication interface may be omitted depending on embodiments. Accordingly, the cooking apparatus 100 may include only the wireless communication interface or include only the wired communication interface. Not only that, the cooking apparatus 100 may include an integrated communication interface 150 that supports both of wireless connection by the wireless communication interface and wired connection by the wired communication interface.

The cooking apparatus 100 is not limited to a case of including one communication interface 150 performing communication connection by one method, but may include a plurality of communication interfaces 150 performing communicative connection by a plurality of methods.

The cooking apparatus 100 may perform communication connection with the external server 300, the user terminal 200, or an external apparatus through the communication interface 150, and transmit or receive the information on the temperatures of each area of the cooking space 10, the information on the cooking operation state, and the control information of the cooking operation parts 20, 30, 40.

A user interface 160 may include a button type interface, a lever type interface, a switch type interface, a touch type interface, etc., and the touch type interface may be implemented as a method of receiving an input by the user's touch on the screen of the display 120.

The processor 140 may receive a user input through the user interface 160. The processor 140 may identify a user instruction corresponding to the user input based on the received user input.

The processor 140 may control the display 120 or the speaker 180 to provide the information on the temperatures of each area of the cooking space 10 and the information on the cooking operation state to the user based on the identified user instruction. Also, the processor 140 may control the cooking operation parts 20, 30, 40 based on the identified user instruction.

The microphone 170 may mean a module that acquires a sound and converts it into an electric signal, and it may be a condenser microphone, a ribbon microphone, a moving coil microphone, a piezoelectric element microphone, a carbon microphone, and a micro electro mechanical system (MEMS) microphone. Also, the microphone 170 may be implemented as methods such as a non-directional method, a bi-directional method, a uni-directional method, a sub cardioid method, a super cardioid method, and a hyper cardioid method.

The processor 140 may acquire voice data of the user through the microphone 170. The processor 140 may identify a user instruction included in the user voice data through a voice recognition model, etc. based on the acquired voice data.

The processor 140 may control the display 120 or the speaker to provide the information on the temperatures of each area of the cooking space 10 and the information on the cooking operation state to the user based on the identified user instruction. Also, the processor 140 may control the cooking operation parts 20, 30, 40 based on the identified user instruction.

The speaker 180 may include a tweeter for reproducing sounds of high-pitched ranges, a mid-range for reproducing sounds of mid-pitched ranges, a woofer for reproducing sounds of low-pitched ranges, a sub-woofer for reproducing sounds of extreme low-pitched ranges, an enclosure for controlling resonance, and a crossover network dividing frequencies of electric signals input into the speaker 180 by each band.

The speaker 180 may output an acoustic signal to the outside of the cooking apparatus 100. The speaker 180 may output reproduction of multimedia, reproduction of recording, various types of notification sounds, voice messages, etc. The cooking apparatus 100 may include an audio output device such as the speaker 180, but may also include an output device such as an audio output terminal. In particular, the speaker 180 may provide acquired information, information processed · produced based on the acquired information, a response result or an operation result for a user voice, etc. in voice forms.

The processor 140 may control the speaker 180 to output the information on the temperatures of each area of the cooking space 10, the information on the cooking operation state, and the control information of the cooking operation parts 20, 30, 40 in a form of auditory information.

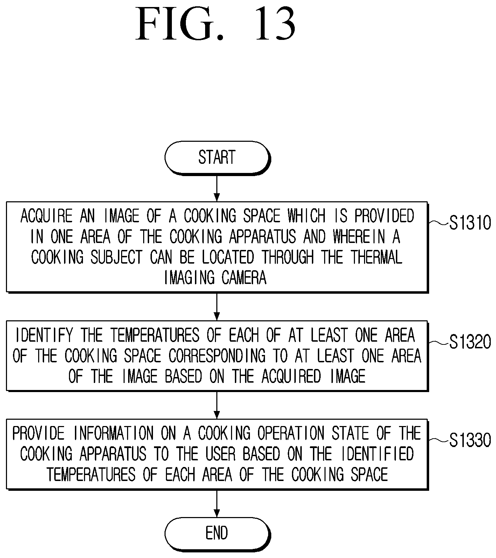

FIG. 13 is a flow chart for illustrating an operation of the cooking apparatus 100 according to one or more embodiments of the disclosure.

Referring to FIG. 13, the cooking apparatus 100 may acquire an image of the cooking space 10 which is provided in one area of the cooking apparatus 100 and in which a cooking subject may be located through the thermal imaging camera 110 in operation S1310. However, the disclosure is not limited thereto, and the cooking apparatus 100 may acquire an image of the cooking space 10 through a visible ray sensing camera or other electromagnetic wave sensing cameras, sensors, etc.

The cooking apparatus 100 may identify the temperatures of each of at least one area of the cooking space 10 corresponding to at least one area of the image based on the acquired image in operation S 1320.

In one or more examples, the cooking apparatus 100 may identify the temperatures of each of the at least one area of the cooking space 10 corresponding to areas of a first number on the image based on the acquired image until the temperature of the cooking space 10 reaches a first temperature after the cooking operation of the cooking apparatus 100 was initiated, and identify the temperatures of each of the at least one area of the cooking space 10 corresponding to areas of a second number on the image based on the acquired image until the temperature of the cooking space 10 reaches a second temperature from the first temperature.

Also, the cooking apparatus 100 may identify the temperatures of each of the at least one area of the cooking space 10 corresponding to areas of a first number on the image based on the acquired image while a first time passes from a time point when the cooking operation of the cooking apparatus 100 was initiated, and identify the temperatures of each of the at least one area of the cooking space 10 corresponding to areas of a second number on the image based on the acquired image while a second time passes from the time point when the first time passed.

The cooking apparatus 100 may control the display 120 or the speaker 180 to provide information on a cooking operation state of the cooking apparatus 100 to the user based on the identified temperatures of each area of the cooking space 10 in operation S 1330.

According to one or more embodiments, methods according to the various embodiments disclosed herein may be provided while being included in a computer program product. A computer program product refers to a product, and it may be traded between a seller and a buyer. A computer program product may be distributed in the form of a storage medium that is readable by machines (e.g.: a compact disc read only memory (CD-ROM)), or distributed directly on-line (e.g.: download or upload) through an application store (e.g.: Play StoreTM), or between two user apparatuses (e.g.: smartphones). In the case of on-line distribution, at least a portion of a computer program product (e.g.: a downloadable app) may be stored in a storage medium readable by machines such as the server of the manufacturer, the server of the application store, and the memory of the relay server at least temporarily, or may be generated temporarily.

While specific example embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

## Claims

1. A cooking apparatus comprising:
a thermal imaging camera;
a display;
a memory configured to store at least one instruction; and
at least one processor configured to execute the at least one instruction to:
acquire, using the thermal imaging camera, an image of a cooking space provided in one area of the cooking apparatus, wherein a cooking subject is located in the image of the cooking space, and the image of the cooking space includes at least one area of the cooking space that is divided into a plurality of sub-areas,
identify, based on the acquired image, temperatures of each sub-area of the at least one area of the cooking space, and
control the display to provide information on a state of a cooking operation of the cooking apparatus to a user based on the identified temperatures of each sub-area of the at least one area of the cooking space.

2. The cooking apparatus of claim 1, wherein the at least one processor is further configured to execute the at least one instruction to:
identify the temperatures of each sub-area of the at least one area of the cooking space corresponding to a first number of sub-areas on the image based on the acquired image until a temperature of the cooking space reaches a first temperature after the cooking operation of the cooking apparatus was initiated, and
identify the temperatures of each sub-area of the at least one area of the cooking space corresponding to a second number of sub-areas on the image based on the acquired image until the temperature of the cooking space reaches a second temperature from the first temperature.

3. The cooking apparatus of claim 1, wherein the at least one processor is further configured to execute the at least one instruction to:
identify the temperatures of each sub-area of the at least one area of the cooking space corresponding to a first number of sub-areas on the image based on the acquired image while a first time passes from a time point at which the cooking operation of the cooking apparatus was initiated, and
identify the temperatures of each sub-area of the at least one area of the cooking space corresponding to a second number of areas on the image based on the acquired image while a second time passes from the time point when the first time passed.

4. The cooking apparatus of claim 2, wherein the second number is greater than the first number, and
wherein the second temperature is greater than the first temperature.

5. The cooking apparatus of claim 1, further comprising:
a cooking operation part configured to transfer heat to the cooking subject or changing a location or the direction of the cooking subject, and
wherein the at least one processor is further configured to execute the at least one instruction to:
identify whether the cooking operation part is in an abnormal state based on the identified temperatures of each sub-area of the at least one area of the cooking space, and
based on identifying that the cooking operation part is in the abnormal state, control the display to provide information on the abnormal state of the cooking operation part to the user.

6. The cooking apparatus of claim 1, further comprising:
a cooking operation part configured to transmit heat to the cooking subject or changing a location or the direction of the cooking subject, and
wherein the at least one processor is further configured to execute the at least one instruction to:
identify one area of the cooking space having a temperature lower than an entire average temperature of the cooking space based on identified temperatures of each sub-area of the at least one area of the cooking space, and
control the cooking operation part to raise the temperature of the one area by heating the one area.

7. The cooking apparatus of claim 1, wherein the at least one processor is further configured to execute the at least one instruction to:
identify whether the cooking subject exists in the cooking space based on a change of the temperature of the cooking space from a time point at which the cooking operation of the cooking apparatus was initiated to a time point at which a predetermined time has passed, and
based on identifying that the cooking subject does not exist in the cooking space, control the display to provide, to the user, information on a cooking operation state corresponding to a state in which the cooking subject does not exist in the cooking space.

8. The cooking apparatus of claim 1, further comprising:
a cooking operation part configured to transmit heat to the cooking subject or change a location or the direction of the cooking subject, and
wherein the at least one processor is further configured to execute the at least one instruction to:
identify an abnormal state of the cooking operation part based on a vector value output by inputting the acquired image of the cooking space into a cooking operation state identification model of the cooking apparatus, and
based on identifying that the cooking operation part is in the abnormal state, control the display to provide information on the abnormal state of the cooking operation part to the user.

9. The cooking apparatus of claim 1, further comprising:
a cooking operation part configured to transmit heat to the cooking subject or changing a location or the direction of the cooking subject, and
wherein the at least one processor is further configured to execute the at least one instruction to:
control the cooking operation part to heat one area of the cooking space having a temperature lower than an average temperature of the at least one area of the cooking space to raise the temperature of the one area based on a vector value output by inputting the acquired image of the cooking space into a cooking operation state identification model of the cooking apparatus.

10. The cooking apparatus of claim 1, wherein the at least one processor is further configured to execute the at least one instruction to:
identify whether the cooking subject exists in the cooking space based on a vector value output by inputting the acquired image of the cooking space into a cooking operation state identification model of the cooking apparatus, and
based on identifying that the cooking subject does not exist in the cooking space, control the display to provide, to the user, information on a cooking operation state corresponding to the state in which the cooking subject does not exist in the cooking space.

11. A method for controlling a cooking apparatus, the method comprising: acquiring, using a thermal imaging camera, an image of a cooking space provided in one area of the cooking apparatus, wherein a cooking subject is located in the image of the cooking space, and the image of the cooking space includes at least one area of the cooking space that is divided into a plurality of sub-areas;
identifying, based on the acquired image, temperatures of each sub-area of the at least one area of the cooking space; and
providing information on a state of a cooking operation of the cooking apparatus to a user based on the identified temperatures of each sub-area of the at least one area of the cooking space.

12. The method of claim 11, further comprising:
identifying the temperatures of each sub-area of the at least one area of the cooking space corresponding to a first number sub-areas on the image based on the acquired image until a temperature of the cooking space reaches a first temperature after the cooking operation of the cooking apparatus was initiated; and
identifying the temperatures of each of the at least one area of the cooking space corresponding to areas of a second number on the image based on the acquired image until the temperature of the cooking space reaches a second temperature from the first temperature.

13. The method of claim 11, further comprising:
identifying the temperatures of each sub-area of the at least one area of the cooking space corresponding to a first number of sub-areas on the image based on the acquired image while a first time passes from a time point in which the cooking operation of the cooking apparatus was initiated; and
identifying the temperatures of each sub-area of the at least one area of the cooking space corresponding to a second number of sub-areas on the image based on the acquired image while a second time passes from the time point in which the first time passed.

14. The method of claim 12, wherein the second number is bigger than the first number, and
wherein the second temperature is bigger than the first temperature.

15. The method of claim 11, further comprising:
identifying whether a cooking operation part is in an abnormal state based on the identified temperatures of each sub-area of the at least one area of the cooking space; and
based on identifying that the cooking operation part is in the abnormal state, providing information on the abnormal state of the cooking operation part to the user.
